(19) Europäisches Patentamt
European Patent Office
Office européen des brevets

(11) **EP 4 272 888 A1**

(12) **EUROPEAN PATENT APPLICATION**

(43) Date of publication:
**08.11.2023 Bulletin 2023/45**

(21) Application number: **22171921.4**

(22) Date of filing: **05.05.2022**

(51) International Patent Classification (IPC):
**B22F 5/08** (2006.01)   **B21K 1/30** (2006.01)
**F16H 1/00** (2006.01)   **B22F 3/03** (2006.01)
**B30B 15/02** (2006.01)

(52) Cooperative Patent Classification (CPC):
**B22F 5/085; B22F 3/03; B30B 15/022;** F16H 55/08

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Volvo Car Corporation
40531 Göteborg (SE)**

(72) Inventors:
• **STEN, Erik
40531 Göteborg (SE)**

• **PETERSSON, Roland
40531 Göteborg (DE)**
• **WITTKE, Peter
40531 Göteborg (DE)**
• **SCARPATI, Jose
40531 Göteborg (SE)**

(74) Representative: **Maiwald GmbH
Engineering
Elisenhof
Elisenstrasse 3
80335 München (DE)**

Remarks:
Amended claims in accordance with Rule 137(2) EPC.

(54) **GEAR COMPONENT**

(57)   The present disclosure relates to a method for manufacturing a gear component, a gear component, a transmission unit for a vehicle comprising such a gear component and a vehicle comprising such a transmission unit.

The method comprises providing a die with an opening, filling the opening with a metallic powder material, compressing the metallic powder material by a compression ram to form a workpiece of the gear component and sintering the workpiece. An inner wall of the opening comprises a first cylindrical opening portion with a first opening helical teeth structure and a second cylindrical opening portion with a second opening helical teeth structure. A first opening base diameter of the first cylindrical opening portion differs from a second opening base diameter of the second cylindrical opening portion. The die is constituted of one-piece.

Fig. 1

EP 4 272 888 A1

# Description

TECHNICAL FIELD

The present disclosure relates to a method for manufacturing a gear component, a gear component, a transmission unit for a vehicle comprising such a gear component and a vehicle comprising such a transmission unit.

BACKGROUND ART

Gears are generally used to change speed, torque and/or direction of a power source by applying different gear ratios translated via teeth arranged at a circumferential surface of each gear. Such mechanical change can be facilitated by providing a stepped gear, which comprising at least two portions having different diameters. The gears may be classified according to an arrangement of the teeth. The gear may be, for instance, a spur gear comprising a plurality of teeth arranged parallel to a rotational axis of the gear, a helical gear comprising the plurality of teeth arranged inclined relative to the rotational axis of the gear, a double helical gear comprising a double set of teeth slanted in opposite directions, a bevel gear shaped similar to a right circular cone with most of its tip cut off, etc.

Due to their complex geometry, however, a manufacture of the stepped helical gear is usually complex, costly and time consuming.

SUMMARY

Hence, there may be a need to provide an improved gear component, which may be easily manufactured.

The problem is at least partially solved or alleviated by the subject matter of the independent claims of the present disclosure, wherein further examples are incorporated in the dependent claims. It should be noted that the aspects of the disclosure described in the following apply to the method for manufacturing a gear component, the gear component, the transmission unit for a vehicle comprising such a gear component and the vehicle comprising such a transmission unit.

According to the present disclosure, a method for manufacturing a gear component is presented. The method comprises providing a die with an opening, filling the opening with a metallic powder material, compressing the metallic powder material by a compression ram to form a workpiece of the gear component and sintering the workpiece. An inner wall of the opening comprises a first cylindrical opening portion with a first opening helical teeth structure and a second cylindrical opening portion with a second opening helical teeth structure. A first opening base diameter of the first cylindrical opening portion differs from a second opening base diameter of the second cylindrical opening portion. The die is constituted of one-piece.

The manufacturing method according to the present disclosure may be adapted to manufacture a stepped mono-block helical gear component. Such gear component may be manufactured by powder compacting press process using a one-piece die, which may facilitate a manufacture of the stepped helical gear component.

Generally, to provide a stepped helical gear component, the metallic powder material may be filled in a two-piece die. In the two-piece die, the metallic powder material may be firstly filled and compressed, subsequently a second filling and a second compression of the metallic powder material may be followed. When removing the compressed powder material formed as the stepped helical gear out of the die, two pieces of die may need to be separated, since the helical lead of the two teeth structures may cause an interlock inside the die. However, such process steps may take long process time and be costly.

In contrast, according to the present disclosure, the die may be completely filled with the metallic powder material in a one-piece die, which may be compressed only one compression ram to form the workpiece to be sintered. The metallic powder material and a sintering process may be suitably selected according to requirements of the gear component. The metallic powder material filling the opening may comprise steel metallic powder material.

The opening of the die may be formed substantially same as the gear component to be manufactured. Hence, to realize the stepped form of the gear component, the opening of the die may also comprise the first cylindrical opening portion and the second first cylindrical opening portion, which have a different size. The first cylindrical opening portion and the second first cylindrical opening portion may be formed integrally.

Further, the first cylindrical opening portion and the opening second cylindrical opening portion are arranged adjacent to each other. In other words, the first cylindrical opening portion and the second first cylindrical opening portion may be arranged next to each other or on top of each other. Preferably, the first cylindrical opening portion and the second first cylindrical opening portion may be arranged on top of each other at the inner wall of the opening in their axial direction. Further, the first cylindrical opening portion and the second first cylindrical opening portion may be arranged such that one of both, which has a bigger opening base diameter, may be positioned at a receiving side of the compression ram. In other words, the opening of the die may be arranged only in one direction.

The compression ram may be adapted to provide enough pressing power to densify the metallic powder material filled in both of the first cylindrical opening portion and the second first cylindrical opening portion of the die.

Further, to realize a helical teeth structure at the gear component, preferably at a circumferential surface of both stepped portion of the gear component, each of the first cylindrical opening portion and the second first cylindrical opening portion may comprise the first opening helical teeth structure and the second opening helical teeth structure, respectively. The first opening helical teeth structure and the second opening helical teeth structure may be formed differently, e.g. with different pitches, or substantially the same.

By providing a one-step powder compacting press process, the manufacturing of the stepped gear component comprising a reliable helical structure may be facilitated, which may improve radial and/or tangential tolerances of the gear component. In addition, the manufacturing method may allow a well-defined structure of the gear component with a great reproducibility.

In an example, the compression ram is applied only in one direction. When compressing the metallic powder material, the compression ram may be applied to close cavity inside the metallic powder material and provide the densely compressed workpiece. Since the metallic powder material may be filled at one in the opening of the die, the compression ram may be also applied only in one direction, preferably from outside onto the opening. Accordingly, a simple construction of the powder compacting press equipment may be achieved.

In an example, the method further comprising rotating the compression ram when compressing the metallic powder material. The compression ram comprises a circumferential helical structure along a circumferential surface of the compression ram.

In order to tightly press the metallic powder material filled in the opening of the die, the compression ram may comprise substantially the same shape and/or size of the opening of the die. Hence, the circumferential helical structure arranged at the circumferential surface of the compression ram may be formed substantially same as one of the first opening helical teeth structure and the second opening helical teeth structure.

For instance, if the first cylindrical opening portion is arranged in the opening to face the compression ram, the circumferential helical structure may be formed same as the first opening helical teeth structure. Likewise, if the second cylindrical opening portion is arranged in the opening to face the compression ram, the circumferential helical structure may be formed same as the second opening helical teeth structure.

Compressing the metallic powder material may be further facilitated by rotating the compression ram when inserting into the opening of the die when compressing the metallic powder material. Accordingly, the circumferential helical structure of the compression ram may be engaged with one of the first opening helical teeth structure or the second opening helical teeth structure to form a reliable helical structure onto the workpiece, thus gear component to be manufactured.

In an example, the first opening base diameter of the first cylindrical opening portion being smaller than the second opening base diameter of the second cylindrical opening portion. To provide the stepped gear component using the die, the first cylindrical opening portion and the second cylindrical opening portion may comprise different diameter from each other. Hence, when arranging the first cylindrical opening portion and the second first cylindrical opening portion at the inner wall of the opening, the first cylindrical opening portion may be positioned at an inner side of the die and the second cylindrical opening portion may be positioned at an outer side of the die, onto which the compression ram may be applied.

In an example, the first opening helical teeth structure and the second opening helical teeth structure of the die comprise a common helical lead. The helical lead may be defined as an axial advance of a helically-arranged tooth during one complete turn. In other words, the helical lead may be defined as a degree of an inclination of the teeth relative to the rotational axis of the gear component.

The term common helical lead may be understood such that the first opening helical teeth structure and the second opening helical teeth structure of the die comprise a common opening helical teeth structure and/or substantially the same pitch, which may be formed on two stepped levels inside the opening. Further, the circumferential helical structure of the ram compression may also comprise the common helical lead. Accordingly, the stepped gear component to be manufactured by the method may also comprise a common helical lead at its stepped portions.

In an example, the method further comprises removing the workpiece out of the opening only in one direction. Since the opening of the die is arranged only at one side, preferably receiving side of the compression ram, the workpiece may be also removed out of the die only in one direction via the opening. Since the stepped portions of the gear component may comprise the common helical lead, the workpiece formed inside the die may not be defected when removed out of the die at once.

According to the present disclosure, a gear component is presented. The gear component comprises a first cylindrical portion and a second cylindrical portion. The first cylindrical portion comprises a first helical teeth structure along its circumferential surface. The second cylindrical portion comprises a second helical teeth structure along its circumferential surface. A base diameter of the first cylindrical portion differs from a base diameter of the second cylindrical portion. The first cylindrical portion and the second cylindrical portion are integrally formed. The first helical teeth structure of the first cylindrical portion and the second helical teeth structure of the second cylindrical portion comprise a common helical lead.

The gear component according to the present disclosure may provide a stepped mono-block helical gear component comprising a common pitch of the helical teeth structure. Such gear component can have improved radial and/or tangential tolerances. In particular, if the gear component is assembled in a compound planetary gear, a tangential and/or angular relationship between the first portion and the second portion of the gear component may be a crucial factor to minimize a load sharing error. By providing the stepped gear component comprising the common pitch, i.e. a common helical lead of the first and second cylindrical portions, an optimal radial and tangential tolerance capability between the first and second portions may be achieved. Thus, a smooth transmission and a long-term durability of the gear component may be ensured.

The gear component may be adopted for a planetary gear transmission, in which two or more gear components are meshed via teeth and placed in series in a same housing providing a larger or smaller gear ratio. Particularly, the stepped gear component may enable a larger torque transmission ratio with equal or smaller volume compared with a single planetary gear component.

To allow a smooth transmission of the meshed gear components, the gear components may be substantially cylindrical. Both of the first cylindrical portion and the second cylindrical portion may comprise a helical teeth structure, which may be formed at each circumferential surface. The helical teeth structure may be formed at an outer circumferential surface of each of the first cylindrical portion and the second cylindrical portion. The helical structure may be understood in that a plurality of teeth of each of the first cylindrical portion and the second cylindrical portion may be arranged along the circumferential surface inclined relative to a rotational axis of the gear component. In other words, each of the first cylindrical portion and the second cylindrical portion may comprise a threaded circumferential surface.

To provide the stepped gear component, the first cylindrical portion and the second cylindrical portion may have a different size. In particular, the first cylindrical portion and a second cylindrical portion may have a different diameter from each other. The diameter may be the base diameter defining a root diameter of the teeth. Alternatively, the diameter may be a pitch diameter or a tip diameter of the teeth.

Preferably, the first cylindrical portion and the second cylindrical portion may be integrally manufactured to form a one-piece gear component. In other words, the first cylindrical portion and the second cylindrical portion may not be produced by combining two separate parts.

To improve the radial and/or the tangential tolerance between the first cylindrical portion and the second cylindrical portion, hence of the gear component, they may comprise a common helical teeth structure. The term common may be understood as substantially same, which may allow a marginal deviation.

The common helical teeth structure may be directed to the common helical lead defining an axial advance of a helically-arranged tooth during one complete turn. In other words, the helical lead may be defined as a degree of an inclination of the teeth relative to the rotational axis of the gear component. Hence, the first cylindrical portion and the second cylindrical portion may comprise the substantially same helical lead, which may be formed on two stepped levels.

In an example, the helical lead comprises a base helix angle. The base helix angle is an angle between each of the first helical teeth structure and the second helical teeth structure and a rotational axis of the gear component. Individual tooth of each helical teeth structure may be formed identically. The base helix angle may be an inclination degree of an axial advance of the tooth or teeth relative to the rotational axis of the gear component. Preferably, the base helix angle may be determined at each circumferential surface of the first cylindrical portion and the second cylindrical portion at a level of the root diameter of each helical teeth structure.

Accordingly, the first helical teeth structure of the first cylindrical portion and the second helical teeth structure of the second cylindrical portion may comprise the common, i.e. substantially same base helix angle.

In an example, the base helix angle of the first helical teeth structure and the base helix angle of the second helical teeth structure are bigger than 0°. In other words, the first helical teeth structure and the second helical teeth structure may be arranged not parallel to the rotational axis of the gear component. Still in other words, the plurality of teeth of the first cylindrical portion and the plurality of teeth of the second cylindrical portion may be arranged inclined relative to the rotational axis of the gear component. The first helical teeth structure and the second helical teeth structure may be arranged clockwise or counter-clockwise at each circumferential surface of the first cylindrical portion and the second cylindrical portion, respectively.

In an example, the first cylindrical portion and the second cylindrical portion are adapted to comply with

$$\frac{\tan(\beta_{b1})}{d_{b1}} = \frac{\tan(\beta_{b2})}{d_{b2}},$$

wherein $\beta_b$ is the base helix angle of each of the first helical teeth structure and second helical teeth structure, and

wherein $d_b$ is the base diameter of each of the first cylindrical portion and the second cylindrical portion.

The equation may define that the first helical teeth structure of the first cylindrical portion may be identical to the second helical teeth structure of the second cylindrical portion. Hence, the common helical lead may fulfill this equation.

In an example, the first cylindrical portion has the smaller base diameter than the second cylindrical portion. To realize the stepped gear component, the first cylindrical portion and the second cylindrical portion may comprise different diameter from each other. Since the first helical teeth structure of the first cylindrical portion and the second helical teeth structure of the second cylindrical portion may be formed substantially identically, the difference of the base diameters would result in a different size of the first cylindrical portion and the second cylindrical portion.

Alternatively, first cylindrical portion may have the lager base diameter than the second cylindrical portion. The base diameter of the first cylindrical portion and the base diameter of the second cylindrical portion may be properly selected according to requirements of an application of the gear component.

In an example, the first cylindrical portion and the second cylindrical portion may be arranged coaxially relative to the rotational axis of the gear component. To increase transmission efficiency of the gear component, the first cylindrical portion and the second cylindrical portion may be arranged to have a same rotational axis. Accordingly, the first cylindrical portion and the second cylindrical portion may comprise a common input shaft and/or a common output shaft, by which both are simultaneously operated.

In an example, the gear component is formed from a metallic powder material. In other words, the gear component may be manufactured by means of a powder compacting press process. During the powder compacting press process, the metallic powder material is filled in a die and compressed to form a basic form or workpiece of the gear component, which may be sintered in a next step. The powder compacting press process may allow a well-defined structure of the gear component with a great reproducibility compared with a conventional cutting process.

According to the present disclosure, a transmission unit for a vehicle is presented. The transmission unit comprises the gear component as described above. The transmission unit may comprise a compound planetary gear transmission unit, which may provide a large torque transmission ratio.

According to the present disclosure, a vehicle is presented. The vehicle comprises the transmission unit as described above. The transmission unit may allow an efficient change of speed, torque and/or direction of a power source by applying different gear ratios translated via teeth arranged at a circumferential surface of each gear components of the transmission unit.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

BRIEF DESCRIPTION OF DRAWINGS

Examples according to the present disclosure will be described in the following with reference to the following drawings.

Fig. 1 shows schematically and exemplarily an example of a gear component according to the present disclosure.

Fig. 2 shows schematically and exemplarily an example of a helical lead according to the present disclosure.

Fig. 3 shows schematically and exemplarily an example of a die according to the present disclosure.

DESCRIPTION OF EXAMPLES

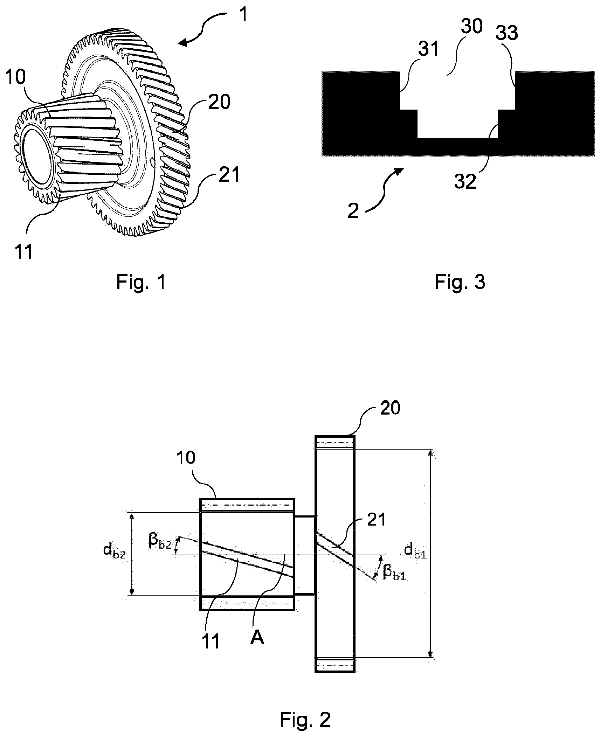

Fig. 1 shows a gear component 1, which may be assembled in a transmission unit of a vehicle. The transmission unit may comprise a compound planetary gear transmission unit, which may allow an efficient change of speed, torque and/or direction of a power source by applying different gear ratios translated via the gear component 1.

The gear component 1 may be manufactured by a powder compacting press process utilizing a die 2. As shown in Fig. 3, the die 2 is constituted of one-piece and comprises an opening 30. An inner wall 31 of the opening 30 comprises a first cylindrical opening portion 32 with a first opening helical teeth structure and a second cylindrical opening portion 33 with a second opening helical teeth structure. The first opening helical teeth structure of the first cylindrical opening portion 32 and the second opening helical teeth structure of the second cylindrical opening portion 33 may comprise a common helical lead. Further A first opening base diameter of the first cylindrical opening portion 32 differs from a second opening base diameter of the second cylindrical opening portion 33. Accordingly, a common helical lead of the stepped portions of the mono-block helical gear component 1 can be realized.

The opening 30 of the die 2 may be filled with a metallic powder material, which may be compressed by a compression ram (not shown) applied only in one direction, preferably from outside onto the opening 30 of the die 2. The compression ram may comprise a circumferential helical structure along a circumferential surface of the compression ram. Hence, when compressing the metallic powder material, the compression ram is rotated in order to be tightly engaged with the one of the second opening helical teeth structure of the second cylindrical opening portion 33. Thus, the metallic powder may be compactly compressed to form a workpiece of the gear component 1, which may be sintered in a next step.

The gear component 1 comprises a first cylindrical portion 10 and a second cylindrical portion 20, which are integrally formed by the powder compacting press process. The first cylindrical portion 10 and the second cylindrical portion 20 are arranged coaxially relative to a rotational axis A of the gear component 1. In other words, the first cylindrical portion 10 and the second cylindrical portion 20 may comprise a common input shaft and/or a common output shaft.

The first cylindrical portion 10 comprises a first helical teeth structure 11 along its circumferential surface. The second cylindrical portion 20 comprises a second helical teeth structure 21 along its circumferential surface. Hence, the first cylindrical portion 10 and the second cylindrical portion 20 comprise a plurality of teeth at each circumferential surface inclined relative to the rotational axis A of the gear component 1.

In addition, the first helical teeth structure 11 of the first cylindrical portion 10 and the second helical teeth structure 21 of the second cylindrical portion 20 comprise a common helical lead. The helical lead can be represented by means of a base helix angle.

As shown in Fig. 2, the base helix angle $\beta_{b1}$, $\beta_{b2}$ is an angle between each of the first helical teeth structure 11 and the second helical teeth structure 21 and the rotational axis A of the gear component 1. Preferably, the base helix angle $\beta_{b1}$ of the first helical teeth structure 11 and the base helix angle $\beta_{b2}$ of the second helical teeth structure 21 are bigger than 0°. In other words, the plurality of teeth of the first cylindrical portion 10 and the plurality of teeth of the second cylindrical portion 20 may be arranged inclined relative to the rotational axis A of the gear component 1.

To provide the common helical lead of the first cylindrical portion 10 and the second cylindrical portion 20, the first helical teeth structure 11 of the first cylindrical portion 10 and the second helical teeth structure 21 of the second cylindrical portion 20 may comprise the common, i.e. substantially same base helix angle. In particular, the first cylindrical portion 10 and the second cylindrical portion 20 are adapted to comply with

$$\frac{\tan(\beta_{b1})}{d_{b1}} = \frac{\tan(\beta_{b2})}{d_{b2}},$$

wherein $\beta_b$ is the base helix angle of each of the first helical teeth structure and second helical teeth structure, and
wherein $d_b$ is a base diameter of each of the first cylindrical portion and the second cylindrical portion.

Further, to provide the stepped gear component 1, the first cylindrical portion 10 and the second cylindrical portion 20 may have a different size. In particular, the base diameter $d_{b1}$ of the first cylindrical portion 10 differs from the base diameter $d_{b2}$ of the second cylindrical portion 20.

Accordingly, an optimal radial and tangential tolerance capability between the first and second portions 10, 20 may be achieved and axial force applied on the gear component 1 may be minimized or even eliminated. Thus, a smooth transmission and a long-term durability of the gear component 1 may be ensured.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for manufacturing a gear component (1), comprising,

   - providing a die (2) with an opening (30),

     an inner wall (31) of the opening (30) comprising a first cylindrical opening portion (32) with a first opening helical teeth structure and a second cylindrical opening portion (33) with a second opening helical teeth structure,
     a first opening base diameter of the first cylindrical opening portion (32) differing from a second opening base diameter of the second cylindrical opening portion (33),

   - filling the opening (30) with a metallic powder material,
   - compressing the metallic powder material by a compression ram to form a workpiece of the gear component (1), and
   - sintering the workpiece,

the die being constituted of one-piece.

2. Method according to claim 1, the compression ram being applied only in one direction.

3. Method according to claim 1 or 2, further comprising rotating the compression ram when compressing the metallic powder material, the compression ram comprising a circumferential helical structure along a circumferential surface of the compression ram.

4. Method according to claim 1, the first opening base diameter of the first cylindrical opening portion (32) being smaller than the second opening base diameter of the second cylindrical opening portion (33).

5. Method according to any of the preceding claims, the first opening helical teeth structure and the second opening helical teeth structure of the die comprising a common helical lead.

6. Method according to any of the preceding claims, further comprising removing the workpiece out of the opening (30) only in one direction.

7. A gear component (1) produced according to any of preceding claims 1 to 6, comprising,

   - a first cylindrical portion (10), and
   - a second cylindrical portion (20),

   the first cylindrical portion (10) comprising a first helical teeth structure (11) along its circumferential surface,

   the second cylindrical portion (20) comprising a second helical teeth structure (21) along its circumferential surface,
   a base diameter ($d_{b1}$) of the first cylindrical portion (10) differing from a base diameter ($d_{b2}$) of the second cylindrical portion (20),
   the first cylindrical portion (10) and the second cylindrical portion (20) being integrally formed, and
   the first helical teeth structure (11) of the first cylindrical portion (10) and the second helical teeth structure (21) of the second cylindrical portion (20) comprising a common helical lead.

8. Gear component (1) according to claim 7, the helical lead comprising a base helix angle ($\beta_{b1}$, $\beta_{b2}$), the base helix angle ($\beta_{b1}$, $\beta_{b2}$) being an angle between each of the first helical teeth structure (11) and the second helical teeth structure (21) and a rotational axis (A) of the gear component (1).

9. Gear component (1) according to claim 8, the base helix angle ($\beta_{b1}$) of the first helical teeth structure

(11) and the base helix angle ($\beta_{b2}$) of the second helical teeth structure (21) being bigger than 0°.

10. Gear component (1) according to any of the preceding claims 7 to 10, the first cylindrical portion (10) and the second cylindrical portion (20) being adapted to comply with

$$\frac{\tan(\beta_{b1})}{d_{b1}} = \frac{\tan(\beta_{b2})}{d_{b2}},$$

$\beta_b$ being the base helix angle of each of the first helical teeth structure (11) and second helical teeth structure (21), and
$d_b$ being the base diameter of each of the first cylindrical portion (10) and the second cylindrical portion (20).

11. Gear component (1) according to any of the preceding claims 7 to 10, the first cylindrical portion (10) having the smaller base diameter ($d_{b1}$) than the second cylindrical portion (20).

12. Gear component (1) according to any of the preceding claims 7 to 11, the gear component (1) being formed from a metallic powder material.

13. A transmission unit for a vehicle, comprising a gear component (1) according to any of the preceding claims 7 to 12.

14. A vehicle, comprising a transmission unit according to claim 13.

**Amended claims in accordance with Rule 137(2) EPC.**

1. A method for manufacturing a gear component (1), comprising,

   - providing a die (2) with an opening (30),

      an inner wall (31) of the opening (30) comprising a first cylindrical opening portion (32) with a first opening helical teeth structure and a second cylindrical opening portion (33) with a second opening helical teeth structure,
      a first opening base diameter of the first cylindrical opening portion (32) differing from a second opening base diameter of the second cylindrical opening portion (33),

   - filling the opening (30) with a metallic powder material,
   - compressing the metallic powder material by a compression ram to form a workpiece of the gear component (1),
- sintering the workpiece, and
- removing the workpiece out of the opening (30) only in one direction, the die being constituted of one-piece.

2. Method according to claim 1, the compression ram being applied only in one direction.

3. Method according to claim 1 or 2, further comprising rotating the compression ram when compressing the metallic powder material, the compression ram comprising a circumferential helical structure along a circumferential surface of the compression ram.

4. Method according to claim 1, the first opening base diameter of the first cylindrical opening portion (32) being smaller than the second opening base diameter of the second cylindrical opening portion (33).

5. Method according to any of the preceding claims, the first opening helical teeth structure and the second opening helical teeth structure of the die comprising a common helical lead.

6. A transmission unit for a vehicle, comprising a gear component (1) directly obtained by a method according to any of the preceding claims 1 to 5.

7. A vehicle, comprising a transmission unit according to claim 6.

Fig. 1

Fig. 3

Fig. 2

Europäisches
Patentamt

European
Patent Office

Office européen
des brevets

# EUROPEAN SEARCH REPORT

Application Number

EP 22 17 1921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 477 824 A2 (SUMITOMO ELECTRIC INDUSTRIES [JP]) 1 April 1992 (1992-04-01) | 1-11 | INV. B22F5/08 B21K1/30 |
| Y | * column 1, lines 1-6 * <br> * column 2, lines 40-49 * <br> * column 3, line 17 - column 4, line 7 * <br> * figures 1, 2, 3a-3B * | 13,14 | F16H1/00 B22F3/03 B30B15/02 |
| X | US 3 020 589 A (MARITANO ODDINO S) 13 February 1962 (1962-02-13) | 7-12 | |
| Y | * column 2, lines 47-50 * <br> * figure 1 * | 13,14 | |
| X | US 3 694 127 A (TAKAHASHI MITSUO ET AL) 26 September 1972 (1972-09-26) | 7-11 | |
| Y | * figure 11 * | 13,14 | |
| Y | EP 0 552 272 A1 (FORMFLO LTD [GB]) 28 July 1993 (1993-07-28) * page 2, lines 1-24 * | 13,14 | |

TECHNICAL FIELDS SEARCHED (IPC)

B22F
B21L
F16H
B21K
B30B

The present search report has been drawn up for all claims

| Place of search | Date of completion of the search | Examiner |
|---|---|---|
| The Hague | 26 September 2022 | Forestier, Gilles |

EPO FORM 1503 03.82 (P04C01)

## ANNEX TO THE EUROPEAN SEARCH REPORT
## ON EUROPEAN PATENT APPLICATION NO.

EP 22 17 1921

This annex lists the patent family members relating to the patent documents cited in  the above-mentioned European search report.
The members are as contained in the European Patent Office EDP file on
The European Patent Office is in no way liable for these particulars which are merely given for the purpose of information.

26-09-2022

| Patent document cited in search report | | | Publication date | Patent family member(s) | | | Publication date |
|---|---|---|---|---|---|---|---|
| EP 0477824 | A2 | | 01-04-1992 | AU | 640525 | B2 | 26-08-1993 |
| | | | | DE | 69103109 | T2 | 09-03-1995 |
| | | | | EP | 0477824 | A2 | 01-04-1992 |
| | | | | ES | 2057700 | T3 | 16-10-1994 |
| | | | | JP | H04136107 | A | 11-05-1992 |
| | | | | KR | 920006062 | A | 27-04-1992 |
| | | | | US | 5259744 | A | 09-11-1993 |
| US 3020589 | A | | 13-02-1962 | NL | 253507 | A | 26-09-2022 |
| | | | | US | 3020589 | A | 13-02-1962 |
| US 3694127 | A | | 26-09-1972 | BE | 759661 | A | 30-04-1971 |
| | | | | US | 3694127 | A | 26-09-1972 |
| EP 0552272 | A1 | | 28-07-1993 | AU | 8669391 | A | 28-04-1992 |
| | | | | CA | 2070180 | A1 | 09-04-1992 |
| | | | | DE | 69105749 | T2 | 24-05-1995 |
| | | | | EP | 0552272 | A1 | 28-07-1993 |
| | | | | ES | 2065711 | T3 | 16-02-1995 |
| | | | | GB | 2250227 | A | 03-06-1992 |
| | | | | JP | H06501988 | A | 03-03-1994 |
| | | | | WO | 9205897 | A1 | 16-04-1992 |

EPO FORM P0459

For more details about this annex : see Official Journal of the European Patent Office, No. 12/82